# EUROPÄISCHE PATENTANMELDUNG

(11) **EP 2 360 108 A1**
(43) Veröffentlichungstag der Anmeldung: **24.08.2011**
(21) Anmeldenummer: 11154147.0
(22) Anmeldetag: 11.02.2011
(51) Int. Cl.: B65G 13/07, B65G 37/00, B65G 47/54, B23Q 7/05

(54) **Vorrichtung zum Rückführen von bearbeiteten Werkstücken**

(30) Priorität: 12.02.2010 DE 202010002285 U
(71) Anmelder: Ligmatech Automationssysteme GmbH, 09638 Lichtenberg (DE)
(72) Erfinder: Die Erfindernennung liegt noch nicht vor
(74) Vertreter: HOFFMANN EITLE

(57) **Zusammenfassung**

Die Erfindung beschreibt eine Vorrichtung (10) zum Rückführen von bearbeiteten Werkstücken (11) zu einer ersten Bearbeitungseinheit, umfassend eine Übernahmeeinrichtung (12) zur Übernahme von bearbeiteten Werkstücken aus der ersten Bearbeitungseinheit und zum Fördern der Werkstücke (11) in einer ersten Richtung (13), eine Querfördereinrichtung (14) zum Fördern der Werkstücke (11) in einer zu der ersten Richtung (13) im Wesentlichen senkrechten Richtung (15), und eine Rückfördereinrichtung (16) zum Fördern der Werkstücke (11) in einer zu der ersten Richtung (13) im Wesentlichen entgegengesetzten Richtung (17), dadurch gekennzeichnet, dass die Werkstücke (11) in der Querfördereinrichtung (14) mittels drehend antreibbarer, rollenförmiger Elemente (30) förderbar sind.

## Beschreibung

### Technisches Gebiet

Die Erfindung betrifft eine Vorrichtung zum Rückführen von bearbeiteten Werkstücken zu einer ersten Bearbeitungseinheit, wobei die Vorrichtung eine Übernahmeeinrichtung zur Übernahme von bearbeiteten Werkstücken aus der ersten Bearbeitungseinheit, eine Querfördereinrichtung zum Fördern der Werkstücke und eine Rückfördereinrichtung zum seitlichen Fördern der Werkstücke aufweist, so dass bearbeitete Werkstücke wieder zu einer Einführseite der Bearbeitungseinheit zurückgefördert werden können. Auf diese Weise ist es beispielsweise möglich, die rückgeführten Werkstücke erneut mittels der ersten Bearbeitungseinheit an beispielsweise einer weiteren Schmalfläche zu bearbeiten.

### Stand der Technik

Im Stand der Technik sind verschiedene Vorrichtungen zum Rückführen von bearbeiteten Werkstücken bekannt. In diesen Vorrichtungen werden teilweise aufwendige Hebemechanismen eingesetzt, um bearbeitete Werktücke quer zur Ausförderrichtung einer Bearbeitungseinheit zu transportieren und anschließend auf einer Rückfördereinrichtung abzulegen (vgl. beispielsweise WO 2002/002799). Diese Vorrichtungen haben jedoch den Nachteil, dass sich in Abhängigkeit von dem zum Querfördern und zum Rückfördern der Werkstücke verwendeten Transportmedium Einschränkungen in Bezug auf die minimal transportierbare Werkstückgröße ergeben und teilweise hohe Investitionskosten für eine solche Vorrichtung zu erbringen sind.

Die DE 4234681 und die EP 1 810 803 offenbaren Vorrichtungen, in denen jeweils der Transport eines langen Werkstücks in Längsrichtung auf Rollen erfolgt.

Die AT 328 364 offenbart eine Vorrichtung, bei welcher der Quertransport mittels Schiebewagen durchgeführt wird, die auf quer zur Transportwalzenbahn ausgerichteten Schienen verfahrbar sind.

### Darstellung der Erfindung

Der Erfindung liegt daher die Aufgabe zugrunde, eine Vorrichtung zum Rückführen von bearbeiteten Werkstücken zu einer ersten Bearbeitungseinheit zu schaffen, die die bekannten Probleme aus dem Stand der Technik löst und die ferner dazu geeignet ist, Werkstücke mit kleinen Abmessungen schonend zu fördern, wobei die Vorrichtung in der Anschaffung kostengünstig herstellbar sein soll.

Die Lösung der Aufgabe erfolgt durch den Gegenstand des Patentanspruchs 1. Bevorzugte Ausgestaltungen der erfindungsgemäßen Vorrichtung ergeben sich aus den Unteransprüchen.

Der Erfindung liegt der Gedanke zugrunde, die Konstruktion der Vorrichtung zu vereinfachen und die Vorrichtung dadurch flexibel einsetzbar zu machen.

Die Vorrichtung zum Rückführen von bearbeiteten Werkstücken einer ersten Bearbeitungseinheit umfasst dabei eine Übernahmeinrichtung zur Übernahme von bearbeiteten Werkstücken aus der ersten Bearbeitungseinheit und zum Fördern der Werkstücke in einer ersten Richtung, eine Querfördereinrichtung zum Fördern der Werkstücke in einer zu der ersten Richtung im Wesentlichen senkrechten Richtung, und eine Rückfördereinrichtung zum Fördern der Werkstücke in einer zu der ersten Richtung im Wesentlichen entgegengesetzten Richtung, wobei die Werkstücke in der Querfördereinrichtung mittels drehend antreibbarer rollenförmiger Elemente förderbar sind.

Durch die Verwendung rollenförmiger Elemente in der Querfördereinrichtung ist es mit Vorteil möglich, die Querfördereinrichtung günstig zu gestalten und eine Querfördereinrichtung zur Verfügung zu stellen, die dazu geeignet ist, Werkstücke jeglicher Abmessungen zu fördern. Auf diese Weise ist es insbesondere möglich, Werktücke mit kleinen Abmessungen zu fördern, ohne dass diese durch große Lücken, wie sie beispielsweise bei der Verwendung von sogenannten Aushubrechen entstehen, hindurchfallen. Zudem ist der Transport auf Rollen besonders schonend für das Werkstück, so dass dieses nicht beschädigt wird.

In einer Ausgestaltung der Erfindung kann das Fördern der Werkstücke durch die Rückfördereinrichtung ebenfalls mittels drehend antreibbarer, rollenförmiger Elemente erfolgen. Auf diese Weise ist es ebenfalls vorteilhaft möglich, die Werkstücke unabhängig von ihrer Größe schonend mittels der Rollen zu transportieren bzw. zu fördern.

In einer weiteren besonders bevorzugten Ausführungsform sind die die Förderaufgabe in der Übernahmeeinrichtung, der Querfördereinrichtung, und der Rückfördereinrichtung übernehmenden Elemente mittels einer einzelnen Antriebseinheit, insbesondere eine elektrischen Antriebseinheit, antreibbar. Auf diese Weise ist es vorteilhaft möglich. Kosten für die Herstellung der Vorrichtung einzusparen, da lediglich ein einzelner Antrieb, der auf geeignete Weise mit den Einrichtungen jeweils verbunden ist, vorgesehen werden muss.

Dabei ist es möglich, die Übernahmeeinrichtung, die Querfördereinrichtung, und die Rückfördereinrichtung jeweils über von der Antriebseinheit abgehende Riemen anzutreiben und/oder zumindest zwei Einheiten aus der Gruppe aus Übernahmeeinrichtung, Querfördereinrichtung und Rückfördereinrichtung über einen gemeinsamen mit der Antriebseinheit verbundenen Riemen anzutreiben. Auf diese Weise kann die Vorrichtung geschickt durch Verwendung eines geeigneten Riemenaufbaus angetrieben werden. Die Riemen stellen dabei ein gut verfügbares und günstiges Kraftübertragungsmittel dar.

Dabei wird bevorzugt, dass die Riemen aus der Gruppe aus Zahnriemen, Flachriemen, Keilriemen und Keilrippenriemen ausgewählt werden und dass die Riemen, um die drei Einrichtungen anzutreiben, jeweils offen, gekreuzt und/oder geschränkt angeordnet sein können. Dabei kann durch die offene Anordnung ein Gleichlauf zwischen antreibendem und abtreibendem Element erwirkt werden, durch die gekreuzte Anordnung ein Gegenlauf zwischen antreibendem und abtreibendem Element erreicht werden und durch die geschränkte Anordnung ein Winkelversatz zwischen antreibendem und abtreibendem Element erreicht werden. Auf diese Weise lassen sich mit Vorteil unterschiedliche Riemenanordnungen realisieren.

Gemäß einer weiteren besonders bevorzugten Ausführungsform ist die Übereinnahmeeinrichtung an ihrer der Querfördereinrichtung zugewandten Seite mit einer Oberdruckeinheit versehen, wobei die Oberdruckeinheit das Werkstück erst freigibt, wenn es vollständig auf dem Querförderelement aufliegt, d. h. die Oberdruckeinheit erwirkt mit Vorteil so lange einen Geradeauslauf des Werkstücks, bis dieses vollständig auf dem Querförderelement aufliegt, und folglich durch den Übergang von der Übernahmeeinrichtung auf die Querfördereinrichtung nicht oder kaum gedreht wird.

Die Oberdruckeinheit weist dabei keinen Antrieb auf und/oder kann relativ zu der Übernahmeeinrichtung höhenverstellbar sein. Dadurch, dass die Oberdruckeinheit bevorzugt keinen Antrieb aufweist, muss keine zusätzliche Energie zur Führung des Werkstückes in Richtung der Querfördereinrichtung verwendet werden. Ferner ist es dadurch, dass die Oberdruckeinheit relativ zur Übernahmeeinrichtung höhenverstellbar ist möglich, unterschiedlich hohe Werkstücke mittels der Oberdruckeinheit zu führen.

In einer weiteren besonders bevorzugten Ausführungsform weist die Übernahmeeinrichtung eine Vielzahl an Auszugselementen auf, die in der horizontalen und parallel zu der ersten Richtung frei anordenbar sind und/oder die ausgebildet sind, um in die erste Bearbeitungseinheit einzugreifen. Die Auszugselemente werden mit Vorteil dazu verwendet, um Werkstücke aus der ersten Bearbeitungseinheit auszufördern. Ferner ist es, dadurch, dass die Auszugselemente frei anordenbar sind, möglich, diese in Abhängigkeit von der ersten Bearbeitungseinheit und von den bearbeiteten Werkstücke vorteilhaft auszurichten.

In einer weiteren besonders bevorzugten Ausführungsform ist die Querfördereinrichtung in Bezug auf die Rückfördereinrichtung so höhenversetzt angeordnet, dass die Querfördereinrichtung über der Rückfördereinrichtung angeordnet ist. Auf diese Weise werden die Werkstücke zunächst mit der Querfördereinrichtung in Querrichtung gefördert und "verkippen", sobald sie sich weit genug über der Rückfördereinrichtung befinden, in Richtung derselbigen und werden anschließend durch die Rückfördereinrichtung mitgenommen. Um ein Verdrehen der Werkstücke beim Übergang zu vermeiden bzw. zu minimieren, ist es vorteilhaft, die Fördergeschwindigkeit der Querfördereinrichtung in Bezug auf die Fördergeschwindigkeit der Rückfördereinrichtung größer zu wählen.

Gemäß einer weiteren besonders bevorzugten Ausführungsform liegt der Durchmesser der rollenförmigen Elemente im Bereich. vom 20 bis 80 mm, bevorzugt im Bereich vom 30 bis 35 mm, und benachbarte rollenförmige Elemente von sowohl der Querfördereinrichtung als auch der Rückfördereinrichtung sind mit einem Abstand angeordnet, der das 1,5-fache des Durchmessers der rollenförmigen Elemente nicht überschreitet. Auf diese Weise ist es mit Vorteil möglich, Werkstücke kleinster Abmessungen zu transportieren, ohne dass diese in dem Zwischenraum zwischen zwei Rollen eingeklemmt werden oder dort verkanten und so zum Stehen kommen.

Es wird ferner bevorzugt, dass die Vorrichtung so aufgebaut ist, dass die Förderrichtung der Querfördereinrichtung umkehrbar ist. Auf diese Weise ist es mit Vorteil möglich, eine besonders flexible Vorrichtung zur Verfügung zu stellen, so dass die Rückfördereinrichtung in Abhängigkeit von der gewählten Förderrichtung der Querfördereinrichtung vor oder hinter der ersten Bearbeitungseinheit angeordnet werden kann.

### Kurze Beschreibung der Zeichnungen

- Fig. 1: zeigt eine perspektivische Darstellung einer erfindungsgemäßen Vorrichtung,
- Fig. 2: zeigt eine mögliche Anordnung einer erfindungsgemäßen Antriebseinheit,
- Fig. 3: zeigt eine mögliche Anordnung von Riemen an der Antriebseinheit,
- Fig. 4: zeigt eine mögliche Anordnung einer Oberdruckeinheit an der Übernahmeinrichtung, und
- Fig. 5: zeigt die Anordnung rollenförmiger Elemente in der Querfördereinrichtung.

### Ausführliche Beschreibung bevorzugter Ausführungsformen der Erfindung

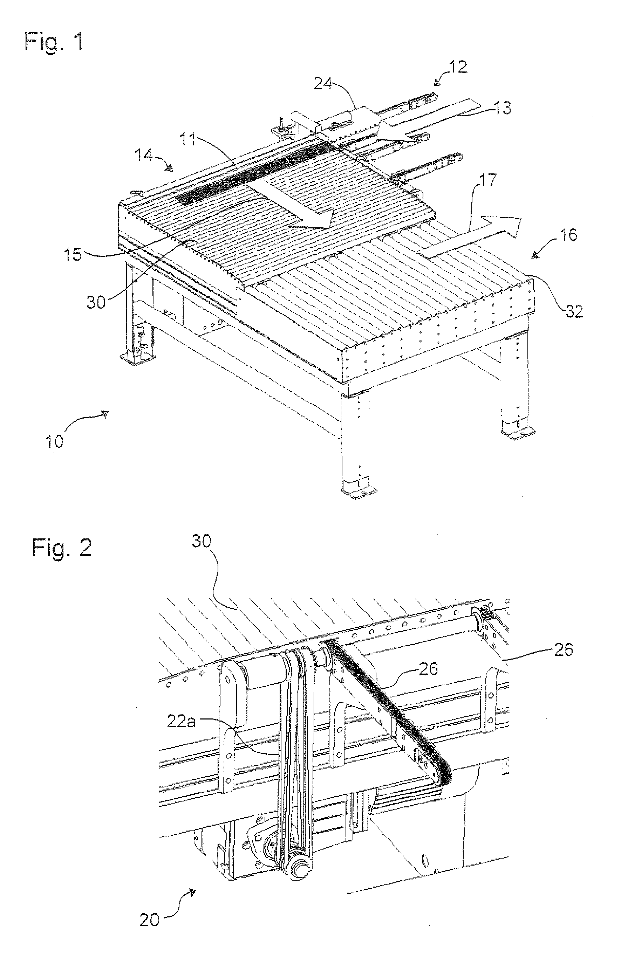

Im Folgenden wird die Erfindung anhand einer beispielhaften möglichen Ausführungsform unter Bezugnahme auf die Fig. 1-5 beschrieben.

Die erfindungsgemäße Vorrichtung 10 weist eine Übernahmeeinrichtung auf, welche dazu geeignet ist, bearbeitete Werkstücke 11 aus einer ersten Bearbeitungseinheit zu übernehmen und diese anschließend in Übernahmerichtung in einer ersten Richtung 13 zu fördern. Die Übernahmeeinrichtung 12 weist dazu bevorzugt eine Vielzahl an Auszugselementen 26 auf, die in der horizontalen und parallel zur Förderrichtung 13 frei anordenbar sind. Die Auszugselemente 26 werden dabei bevorzugt so beabstandet angeordnet, dass sowohl Werkstücke mit kleinen Abmessungen, als auch Werkstücke mit großen Abmessungen sicher transportiert werden können.

Am Förderende der Übernahmeeinrichtung 12 ist eine Querfördereinrichtung 14 angeordnet. Um sicherzustellen, dass die Werkstücke beim Übergang von der Übernahmeeinrichtung 12 zu der Querfördereinrichtung 14 nicht verdreht werden, ist an' der Übernahmeeinrichtung 12 eine Oberdruckeinheit 24 angeordnet, die eine geradlinige Führung des Werkstücks sicherstellt und das Werkstück erst freigibt, wenn es vollständig auf der Querfördereinrichtung 14 aufliegt. Obwohl die Oberdruckeinheit 24 prinzipiell mit einem Antrieb versehen sein könnte, weist die Oberdruckeinheit in der bevorzugten Ausführungsform keinen Antrieb auf, um die Komplexität und damit den Preis der Vorrichtung gering zu halten. Die Oberdruckeinheit 24 ist relativ zur übernahmeeinrichtung 12 höhenverstellbar, so dass Werkstücke 11 mit unterschiedlichen Höhenabmessungen gefördert werden können.

Die Querfördereinrichtung 14 fördert die Werkstücke in einer zu der ersten Richtung im Wesentlichen senkrechten Richtung 15, d. h. zur Seite. Zum Fördern der Werkstücke 11 weist die Querfördereinrichtung 14 rollenförmige Elemente 30 auf, so dass die Werkstücke 11 von Rolle zu Rolle über einen sogenannten "Rollenteppich" transportiert werden. Auf die Antreibweise der Rollen wird später eingegangen.

Sowie die Werkstücke 11 soweit gefördert wurden, dass sie die Querfördereinrichtung 14 hinter sich lassen, erreichen die Werkstücke 11 eine Rückfördereinrichtung 16, welche in Bezug auf die Querfördereinrichtung 14 leicht unterhalb der Querfördereinrichtung 14 angeordnet ist , wobei eine Überlappung zwischen Querfördereinrichtung 14 und Rückfördereinrichtung 16 ebenfalls möglich ist. Die Rückfördereinrichtung 16 fördert die Werkstücke in einer zu der ersten Richtung 13 im Wesentlichen entgegengesetzten Richtung 17, also zurück zu der ersten Bearbeitungseinheit. Die Förderlänge der Rückfördereinrichtung 16 ist dabei länger als in Fig. 1 gezeigt, so dass die Werkstücke 11 im Wesentlichen bis zu dem Werkstückeingang bzw. der Werkstückaufnahme der ersten Bearbeitungseinheit gefördert werden können, so dass nur noch ein seitliches Versetzen der Werkstücke 11 hin zu dem Eingang notwendig ist, um ein erneutes Bearbeiten der Werkstücke oder dergleichen zu ermöglichen.

In der Rückfördereinrichtung 16 werden die Werkstücke ebenfalls mittels rolleförmiger Elemente 32 gefördert. Die Fördergeschwindigkeit in der Rückfördereinrichtung 16 ist dabei im Vergleich zur Fördergeschwindigkeit in der Querfördereinrichtung 14 bevorzugt so zu wählen, dass die Fördergeschwindigkeit in der Rückfördereinrichtung geringer ist als in der Querfördereinrichtung 14. Auf diese Weise kann ein Verdrehen der Werkstücke beim Übergang von der Querfördereinrichtung 14 auf die Rückfördereinrichtung 16 vermieden bzw. minimiert werden.

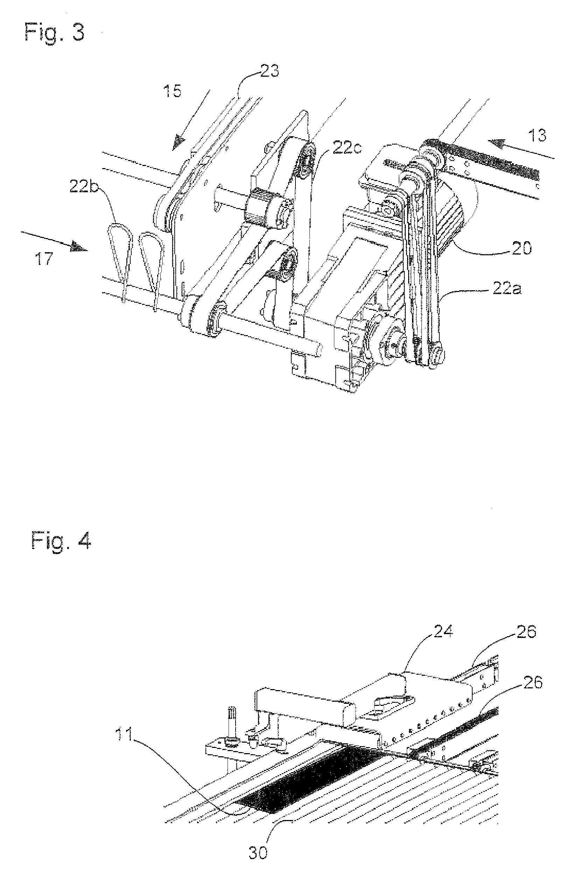

Wie in den Figuren 2 und 3 gezeigt, werden sämtliche Einrichtungen, also die Übernahmeeinrichtung 12, die Querfördereinrichtung 14 und die Rückfördereinrichtung 16, bevorzugt mittels einer einzigen elektrischen Antriebseinheit 20 angetrieben. Auf diese Weise ist es lediglich notwendig, eine Antriebseinheit für die gesamte Vorrichtung vorzusehen, so dass sich der Aufbau der Vorrichtung vereinfacht. Um die Einrichtungen 12, 14, 16 anzutreiben, gehen von der Antriebseinheit 20 Riemen 22a, 22b, 22c, 23 ab. Die Riemen 22a, 22b, 22c können dabei in der Form von Zahnriemen, Flachriemen, Keilriemen, Keilrippenriemen oder Friktionsriemen 23 gemäß ihren jeweiligen Anforderungen ausgebildet sein. Mittels der Friktionsriemen 23 ist es beispielsweise, bei Anordnung der Antriebeinheit 20 unterhalb der Querfördereinrichtung 14 möglich, sämtliche Rollen 30 der Querfördereinrichtung 14 mit einer geringen Anzahl von Riemen durch Reibung eines Riemens an einer Vielzahl Rollen anzutreiben. Zum Antrieb der Rollen 32 der Rückfördereinrichtung 16 ist es vorteilhaft, die Riemen 22b geschränkt bzw. halb gekreuzt anzuordnen, so dass ein um 90 ^{c} gedrehter Antrieb möglich ist. Die Riemen 22a zum Antreiben der Übernahmeeinrichtung 12 können ebenfalls geschränkt ungeordnet sein.

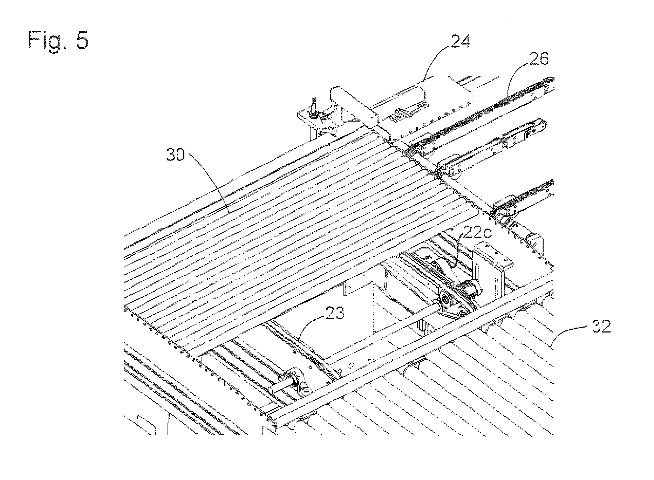

Um einen sicheren Transport von Werkstücken 11 mit kleinen sowie größeren Abmessungen zu gewährleisten, werden die Rollen 30, 32 bevorzugt mit einem Durchmesser im Bereich von 30 bis 35 mm versehen und so angeordnet, dass zwischen den Rollen 30, 32 lediglich ein Minimum an Abstand vorhanden ist, so dass das Werkstück 11 nicht zwischen den Rollen 30, 32 hängen bleiben kann (siehe Figuren 4 und 5).

In alternativen Ausführungsformen der Erfindung können die Riemen von der Antriebseinheit 20 auf unterschiedliche Weise abgehen. Sie können beispielsweise so abgehen, dass die Riemen 22a, 22b, 22c, 23 jeweils zumindest zwei der Einheiten 12, 14, 16 antreiben oder so, dass jeweils von der Antriebseinheit 20 abgehende Riemen direkt zu der jeweiligen Einrichtung 12, 14, 16 geführt werden.

Die Vorrichtung 10 ist bevorzugt so aufgebaut, dass die Förderrichtung 15 der Querfördereinrichtung 14 leicht umkehrbar ist und dass die Rückfördereinrichtung 16 auf beiden Seiten der Querfördereinrichtung 14 angeordnet werden kann. Auf diese Weise ist es möglich, Werkstücke beidseitig der Querfördereinrichtung 14 nach Durchführung geringfügiger Umbaumaßnahmen zurückzufördern.

## Patentansprüche

1. Vorrichtung (10) zum Rückführen von bearbeiteten Werkstücken (11) zu einer ersten Bearbeitungseinheit, umfassend
- eine Übernahmeeinrichtung (12) zur Übernahme von bearbeiteten Werkstücken aus der ersten Bearbeitungseinheit und zum Fördern der Werkstücke (11) in einer ersten Richtung (13),
- eine Querfördereinrichtung (14) zum Fördern der Werkstücke (11) in einer zu der ersten Richtung (13) im Wesentlichen senkrechten Richtung (15), und
- eine Rückfördereinrichtung (16) zum Fördern der Werkstücke (11) in einer zu der ersten Richtung (13) im Wesentlichen entgegengesetzten Richtung (17),
**dadurch gekennzeichnet, dass**
die Werkstücke (11) in der Querfördereinrichtung (14) mittels drehend antreibbarer, rollenförmiger Elemente (30) förderbar sind.

2. Vorrichtung nach Anspruch 1, **dadurch gekennzeichnet, dass** die Werkstücke (11) in der Rückfördereinrichtung (16) mittels drehend antreibbarer, rollenförmiger Elemente (32) förderbar sind.

3. Vorrichtung nach Anspruch 1 oder 2, **dadurch gekennzeichnet, dass** die die Förderaufgabe in der Übernahmeeinrichtung (12), der Querfördereinrichtung (14) und der Rückfördereinrichtung (16) übernehmenden Elemente mittels einer einzelnen Antriebseinheit (20), insbesondere einer elektrischen Antriebseinheit, antreibbar sind.

4. Vorrichtung nach Anspruch 3, **dadurch gekennzeichnet, dass** die Übernahmeeinrichtung (12), die Querfördereinrichtung (14) und die Rückfördereinrichtung (16) jeweils über von der Antriebseinheit (20) abgehende Riemen (22a, 22b, 22c) antreibbar sind.

5. Vorrichtung nach Anspruch 3 oder 4, **dadurch gekennzeichnet, dass** zumindest zwei Einheiten aus der Gruppe aus der Übernahmeeinrichtung (12), der Querfördereinrichtung (14) und der Rückfördereinrichtung (16) über einen gemeinsamen mit der Antriebseinheit (20) verbundenen Riemen (22a, 22b, 22c) antreibbar sind.

6. Vorrichtung nach Anspruch 4 oder 5, **dadurch gekennzeichnet, dass** die Riemen (22a, 22b, 22c) bevorzugt aus der Gruppe aus Zahnriemen, Flachriemen, Keilriemen und Keilrippenriemen ausgewählt werden.

7. Vorrichtung nach einem der Ansprüche 4 bis 6, **dadurch gekennzeichnet, dass** die Riemen (22a, 22b, 22c) offen, gekreuzt und/oder geschränkt angeordnet sind.

8. Vorrichtung nach einem der vorhergehenden Ansprüche, **dadurch gekennzeichnet, dass** die die Übernahmeeinrichtung (12) mit einer Oberdruckeinheit (24) versehen ist, die das Werkstück (11) erst freigibt, wenn es vollständig auf dem Querfördereinrichtung (14) aufliegt.

9. Vorrichtung nach Anspruch 8, **dadurch gekennzeichnet, dass** die Oberdruckeinheit (24) keinen Antrieb aufweist und/öder relativ zu der Übernahmeeinrichtung (12) höhenverstellbar ist.

10. Vorrichtung nach einem der vorhergehenden Ansprüche, **dadurch gekennzeichnet, dass** die Übernahmeeinrichtung (12) eine Vielzahl an Auszugselementen (26) aufweist, die in der Horizontalen und parallel zu der ersten Richtung frei anordenbar sind und/oder die ausgebildet sind, um in die erste Bearbeitungseinheit einzugreifen.

11. Vorrichtung nach einem der vorhergehenden Ansprüche, **dadurch gekennzeichnet, dass** die Querfördereinrichtung (14) in Bezug auf die Rückfördereinrichtung (16) so höhenversetzt angeordnet ist, dass die Querfördereinrichtung (14) über der Rückfördereinrichtung (16) angeordnet ist.

12. Vorrichtung nach einem der vorhergehenden Ansprüche, **dadurch gekennzeichnet, dass** die Fördergeschwindigkeit der Querfördereinrichtung (14) größer ist als die Fördergeschwindigkeit der Rückfördereinrichtung (16).

13. Vorrichtung nach einem der vorhergehenden Ansprüche, **dadurch gekennzeichnet, dass** der Durchmesser der rollenförmigen Elemente (30, 32) in Bereichen 20 bis 80 mm, bevorzugt 30 bis 35, liegt und benachbarte rollenförmige Elemente (30, 32) mit einem Abstand angeordnet sind, der das 1,5-fache des Durchmessers der rollenförmigen Elemente nicht überschreitet.

14. Vorrichtung nach einem der vorhergehenden Ansprüche, **dadurch gekennzeichnet, dass** die Vorrichtung (10) so aufgebaut ist, dass die Förderrichtung der Querfördereinrichtung (14) umkehrbar ist.
